# EUROPEAN PATENT APPLICATION

(11) **EP 4 681 892 A1**
(43) Date of publication of application: **21.01.2026**
(21) Application number: 24779566.9
(22) Date of filing: 15.03.2024
(51) Int. Cl.: B25J 13/00

(54) **CONTROL METHOD, CONTROL DEVICE, GENERATION METHOD, AND GENERATION DEVICE**

(30) Priority: 31.03.2023 JP 2023058168
(71) Applicant: Sony Group Corporation, Tokyo 108-0075 (JP)
(72) Inventor: KASAI, Takara, Tokyo 108-0075 (JP); MATSUDA, Yasuhiro, Tokyo 108-0075 (JP)
(74) Representative: D Young & Co LLP
(86) International application number: PCT/JP2024/010175
(87) International publication number: WO 2024/203437

(57) **Abstract**

According to the present disclosure, there is provided a control method in which a control device executes processing of: acquiring a terminal element from a cyclic structure having rules for operations of a robot as elements; determining an operation to be executed based on the terminal element; executing the determined operation; acquiring an element next to the element corresponding to the determined operation from the cyclic structure; determining an operation to be executed based on the next element; and repeating the determination and the execution of the operations until there is no more element to be executed in the cyclic structure. As described above, motion control of the robot is performed using the cyclic structure having the rules for the operations of the robot as the elements, so that the control device can ensure flexibility for the motion control of the robot.

## Description

### Field

The present disclosure relates to a control method, a control device, a generation method, and a generation device.

### Background

Robots such as mobile manipulators in service industries, such as activity support/nursing care support, food and beverage/dining-out, and retail, are required to have flexibility to be able to recombine a plurality of basic motion control functions according to a situation with various kinds of target objects, environments, and tasks. Further, it is also required to achieve both stability of reliably enabling execution of tasks and time efficiency of fulfilling given tasks in a short time.

For example, in motion control in pick-and-place or the like, the stability is ensured by first forming a steady state for switching of a motion control mode and then transitioning to the next motion control mode after a sufficient time elapses.

### Citation List

### Patent Literature

Patent Literature 1: JP 2013-059846 A

### Summary

### Technical Problem

However, in the motion control passing through the steady state, the time efficiency is sacrificed by passing through the steady state every time a motion control mode is switched although the stability can be ensured. On the other hand, there is a method of ensuring the time efficiency and the stability without passing through the steady state at the time of switching the motion control mode by inputting scenario information in which kinds of operations and the like are described in series to a robot, generating a command queue based on the scenario information, and executing commands. However, in robot control based on the scenario information, the execution order of the commands in the command queue is not evaluated and the execution order of the commands is not determined until immediately before the execution, and thus it is difficult to use the motion control in consideration of preceding and subsequent tasks, which lacks the flexibility.

Therefore, the present disclosure proposes a control method, a control device, a generation method, and a generation device capable of ensuring the flexibility for motion control of a robot.

### Solution to Problem

According to the present disclosure, there is provided a control method. The control method in which a control device executes processing of acquiring a terminal element from a cyclic structure having rules for operations of a robot as elements, determining one of the operations to be executed based on the terminal element, executing the determined operation, acquiring, from the cyclic structure, one of the elements in a next execution order for the determined operation, determining another of the operations to be executed based on the next element, and repeating the determination and the execution of the operations until the elements to be executed disappear from the cyclic structure.

Further, according to the present disclosure, there is provided a control device. The control device includes a control unit that acquiring a terminal element from a cyclic structure having rules for operations of a robot as elements, determining one of the operations to be executed based on the terminal element; executing the determined operation, acquiring one of the elements in a next execution order for the determined operation from the cyclic structure, determining another of the operations to be executed based on the element in the next execution order, and executes a process of repeating the determination and the execution of the operations until the elements to be executed disappear from the cyclic structure.

Further, according to the present disclosure, there is provided a generation method. The generation method in which a generation device executes processing of acquiring operations of a robot and identifiers for executing the operations, and arranging the operations as elements of the cyclic structure based on the identifiers in such a manner that the operations are executed from a terminal element of the cyclic structure and generating the cyclic structure with rules for the operations as the elements.

Further, according to the present disclosure, there is provided a generation device. The generation device includes a control unit that acquires an operation of a robot and an identifier for executing the operation, and arranges the operation as an element of a cyclic structure based on the identifier in such a manner that the operation is executed from a terminal element of the cyclic structure and generating the cyclic structure having a rule for the operation as the element.

### Brief Description of Drawings

FIG. 1 is a diagram illustrating an example of motion control of a robot.
FIG. 2 is a diagram illustrating an example of failure in the motion control of the robot.
FIG. 3 is a diagram illustrating an example of motion control passing through a steady state.
FIG. 4 is a diagram illustrating an example of a relationship between a speed and a position by the motion control passing through the steady state.
FIG. 5 is a diagram illustrating an example of a relationship between a speed and a position by motion control without passing through the steady state.
FIG. 6 is a diagram illustrating an example of a return operation by the motion control passing through the steady state.
FIG. 7 is a block diagram illustrating a functional configuration example of a control device 100 according to the present embodiment.
FIG. 8 is a diagram for describing representation of a cyclic structure according to the present embodiment.
FIG. 9 is a diagram for describing execution the order of motion control using the cyclic structure according to the present embodiment.
FIG. 10 is a diagram for describing a method (1) of adding an operation to the cyclic structure according to the present embodiment.
FIG. 11 is a diagram for describing a method (2) of adding an operation to the cyclic structure according to the present embodiment.
FIG. 12 is a diagram for describing a method of adding and deleting an operation to and from the cyclic structure according to the present embodiment.
FIG. 13 is a diagram for describing a normal system of the motion control using the cyclic structure according to the present embodiment.
FIG. 14 is a diagram for describing an abnormal system of the motion control using the cyclic structure according to the present embodiment.
FIG. 15 is a flowchart illustrating a flow of motion control processing using the cyclic structure according to the present embodiment.
FIG. 16 is a flowchart illustrating another example of the flow of the motion control processing using the cyclic structure according to the present embodiment.
FIG. 17 is a block diagram illustrating a hardware configuration example of the control device 100 according to the present embodiment.

### Description of Embodiments

Hereinafter, the present embodiment will be described in detail with reference to the drawings. Note that substantially the same portions are denoted by the same reference signs in the present specification and the drawings, and a repetitive description thereof will be omitted.

Note that the description will be given in the following order.
0. Related Art
1. Embodiment
   1.1. Functional Configuration Example
   1.2. Functional Flow
2. Hardware Configuration Example
3. Summary

### <0. Related Art>

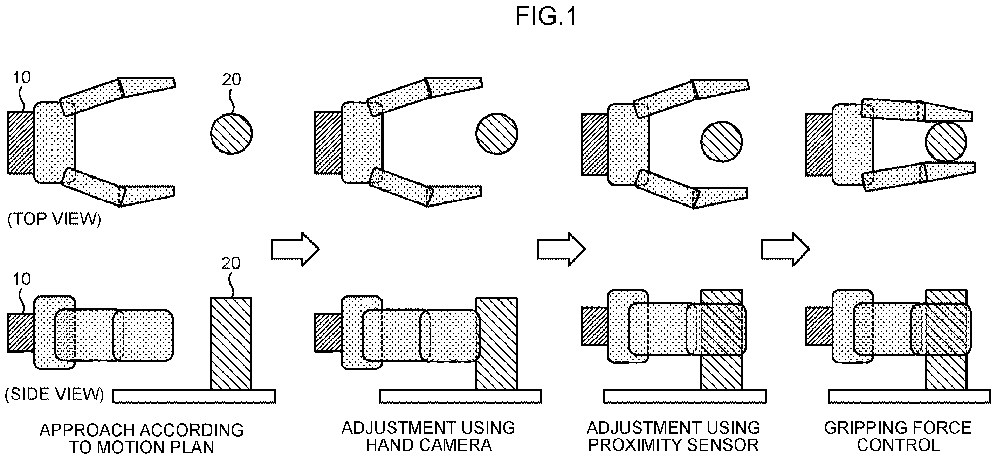

First, before describing the present embodiment, motion control of a robot such as a mobile manipulator will be described. FIG. 1 is a diagram illustrating an example of the motion control of the robot. FIG. 1 illustrates, for example, a series of motion control of pick-and-place by the robot such as a mobile manipulator in time series from the left. A hand 10 is, for example, a gripper hand connected to a control device for controlling the hand 10 and equipped with a hand camera (not illustrated) such as an RGBD camera or a proximity sensor.

As illustrated in FIG. 1, in the pick-and-place motion control, first, the hand 10 is controlled by the control device according to a predetermined motion plan, and approaches a target object 20. Next, a position and a posture of the hand 10 are adjusted using the hand camera provided at a tip of the hand 10, and the position and the posture of the hand 10 are further adjusted using the proximity sensor provided in the hand 10, for example, when approaching the target object 20 by a predetermined distance. Then, when the hand 10 approaches the range in which the target object 20 can be gripped, a gripping force of the hand 10 is controlled according to a predetermined gripping plan, and the target object 20 is gripped.

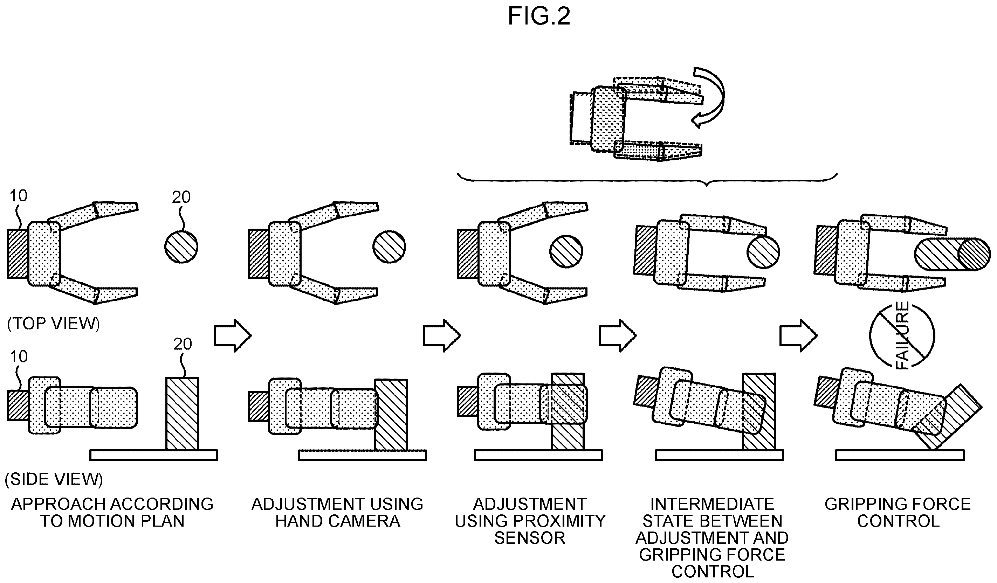

FIG. 2 is a diagram illustrating an example of failure in the motion control of the robot. Strictly speaking, the pick-and-place motion control as illustrated in FIG. 1 has an intermediate state in which adjustment of the position and the posture of the hand 10 using the hand camera or the proximity sensor and the gripping force control are repeated as illustrated in FIG. 2. As described above, in the pick-and-place motion control, the predetermined plan such as the motion plan or the gripping plan is not executed as it is, but control is performed by switching to the camera or the sensor according to the relative relationship with the target object 20 in the process of approaching the target object 20. In particular, when the target object 20 is an unknown object, it may be difficult to obtain sufficient sensor information from the camera or the sensor in the process of controlling the hand 10 according to the motion plan or the grip plan. Therefore, the control device updates the position and the posture of the hand 10 and performs control while bringing the hand 10 close to the target object 20 and changing and adding the sensor information and the like used for controlling the hand 10.

Therefore, in the case of such pick-and-place motion control, a control mode is switched to the gripping force control, for example, after the position and the posture of the hand 10 are adjusted using the proximity sensor. However, in the gripping force control, it is assumed that a relationship between relative positions and postures of the hand 10 and the target object 20 does not change during a transition period of the control mode switching. Therefore, in the transition period of the control mode switching, instruction values from the control device to an actuator are discontinuous, and a state in which the posture or the position of the hand 10 cannot be continuously maintained may occur as illustrated in the upper part of FIG. 2. When such a state occurs, the gripping force control is operated in a state where the posture or the position of the hand 10 is unintended, and, as illustrated in FIG. 2, gripping may fail as, for example, the target object 20 cannot be gripped or is toppled, or the target object 20 is dropped in the middle of being gripped. Alternatively, even if the target object 20 can be gripped, the target object 20 may be gripped with an unintended position or posture, and thus contact may be made with a surrounding environmental structure or an object not to be gripped. Therefore, there is a motion control method in which stability is ensured by first forming a steady state for switching of a motion control mode and then transitioning to the next motion control mode after a sufficient time elapses.

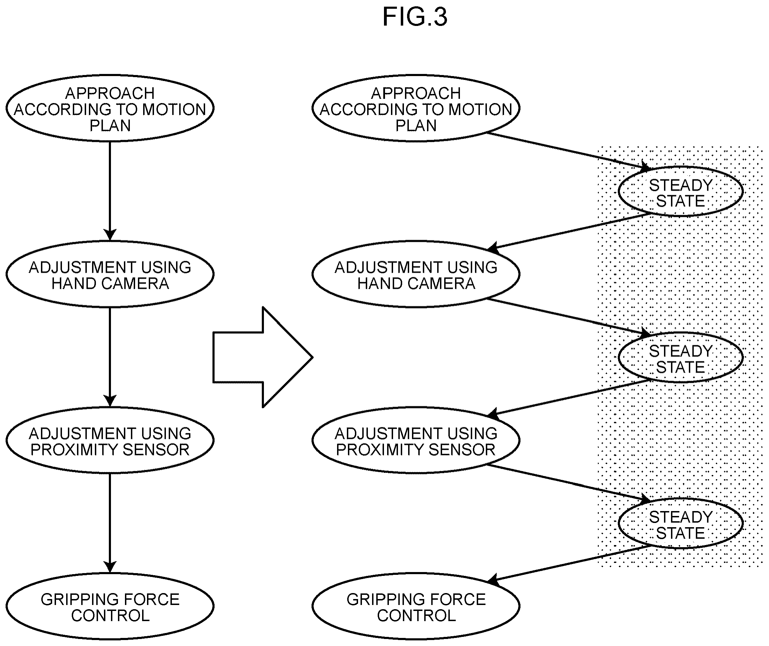

FIG. 3 is a diagram illustrating an example of motion control passing through the steady state. The left side of FIG. 3 is an example of motion control mode switching in design. In such motion control mode switching, as described above, for example, an unintended portion of the hand 10 comes into contact with the target object 20 to change the position or the posture of the target object 20, or the hand 10 comes into contact with a surrounding environmental structure or an object not to be gripped, and thus the transition to the next motion control mode is made even when a post-condition for switching to the next motion control mode is not satisfied originally. Further, for example, in the gripping force control, which is the next motion control mode, control is performed without satisfying a pre-condition such as the position and the posture assumed in the gripping plan or the like. Therefore, as illustrated on the right side of FIG. 3, the steady state is passed for switching of the motion control mode, and the control device suppresses switching of a motion control mode in an unintended state in which the post-condition or the pre-condition is not satisfied by passing through the steady state for switching the motion control mode. As a result, a success rate of a task is improved, and the stability of the motion control can be ensured, but time efficiency is lowered by passing through the steady state every time a motion control mode is switched.

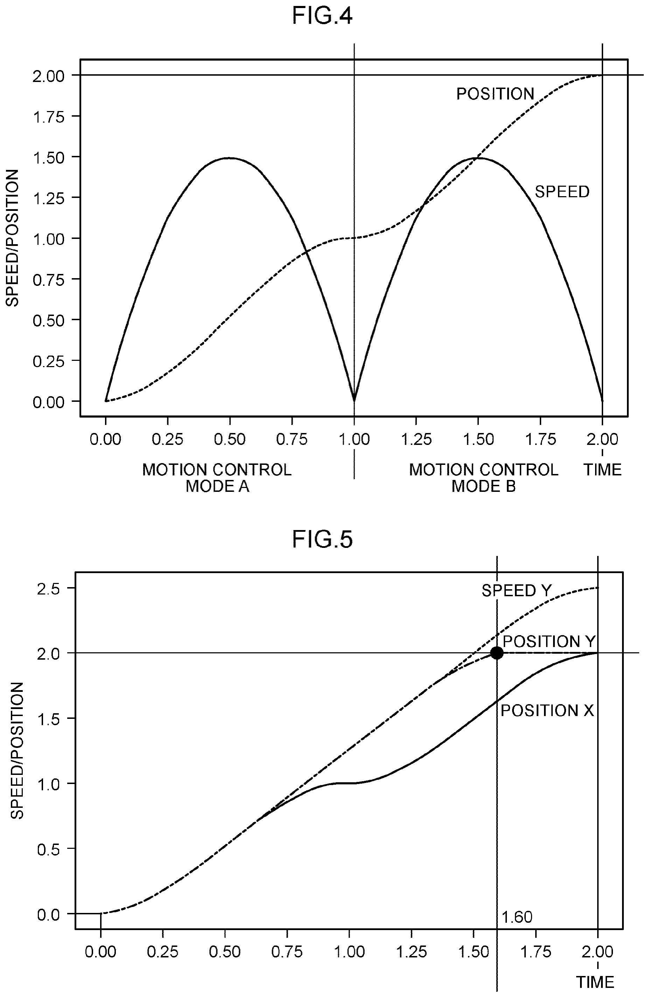

FIG. 4 is a diagram illustrating an example of a relationship between a speed and a position by motion control passing through the steady state. A graph illustrated in FIG. 4 has a vertical axis indicating a speed and a position of the hand 10 and a horizontal axis indicating time (seconds), and the graph illustrates a relationship between the speed and the position of the hand 10 in a case where Motion control mode A is switched to Motion control mode B via the steady state. Note that the position of the hand 10 is a relative position, and for example, 0.00 is a start position, and 2.00 is a target position where the target object 20 is present. Further, the speed of the hand 10 indicated on the vertical axis is also merely an example. As illustrated in FIG. 4, since Motion control mode A is switched to Motion control mode B (after one second elapses) via the steady state, the speed of the hand 10 becomes zero, and the position also stagnates at 1.00 point. Then, the vehicle reaches the target position 2.00 point after two seconds elapse.

FIG. 5 is a diagram illustrating an example of a relationship between a speed and a position by motion control without passing through the steady state. A graph illustrated in FIG. 5 is a graph illustrating a relationship between the speed and the position of the hand 10 in the case of the motion control without passing through the steady state in contrast to the case of the motion control passing through the steady state illustrated in FIG. 4. Note that, in the graph illustrated in FIG. 5, a position in the case of the motion control passing through the steady state is represented as a position X, and a speed and a position in the case of the motion control without passing through the steady state are represented as a speed Y and a position Y, respectively, in order for comparison with the graph illustrated in FIG. 4. As illustrated in FIG. 5, in the case of the motion control without passing through the steady state, the hand 10 is in a constant speed state as indicated by the speed Y, and thus reaches the target position 2.00 point after 1.6 seconds elapses. That is, a dead time of about 0.4 seconds is generated in the case of the motion control passing through the steady state. Therefore, there is a method of ensuring the time efficiency and the stability by motion control using scenario information, for example, as disclosed in Patent Literature 1. However, in the motion control using the scenario information, for example, it is difficult to use the motion control in consideration of preceding and subsequent tasks, which lacks flexibility.

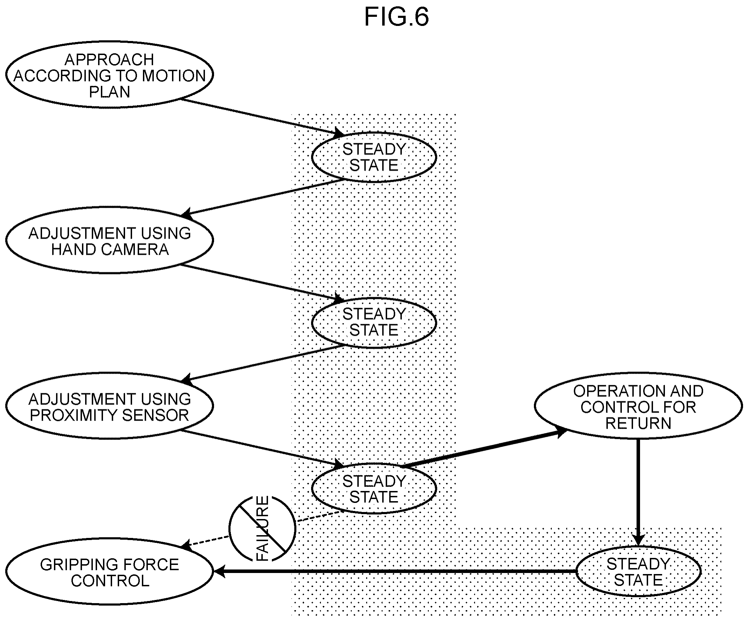

FIG. 6 is a diagram illustrating an example of a return operation by the motion control passing through the steady state. FIG. 6 is a diagram for describing the return operation when the gripping force control as illustrated in FIG. 2 fails, for example. For example, it is obvious that the gripping force control fails in a case where the post-condition or the pre-condition for switching to the gripping force control, which is the next motion control mode, is not satisfied after the position and the posture of the hand 10 are adjusted using the proximity sensor. Therefore, when the post-condition or the pre-condition for switching to the gripping force control is not satisfied, it is required to switch to the gripping force control after performing the return operation such as adjustment of the position and the posture of the hand 10 using the proximity sensor or the hand camera again without switching to the gripping force control. Further, regarding such switching to the return operation, in view of the entire task execution speed, it is required to appropriately update the execution order of the motion control modes, for example, at a time point when the post-condition or the pre-condition is not satisfied during the immediately preceding motion control mode and the switching to the return operation is required.

Therefore, an object of the present embodiment is to ensure flexibility in motion control by flexibly changing the execution order of motion control modes while ensuring task stability and time efficiency in motion control of a robot.

### <1. Embodiment>

### <<1.1. Functional Configuration Example>>

Next, a control device 100 according to the present embodiment will be described. The control device 100 is, for example, an information processing device, such as a server computer, a desktop personal computer (PC), or a notebook PC, which is managed by a provider of a service, such as activity support/nursing care support, food and beverage/dining-out, or retail, using a robot such as a mobile manipulator. Alternatively, the control device 100 may be, for example, a computer built in a robot such as a mobile manipulator. The control device 100 is communicably connected to a robot such as a mobile manipulator by, for example, wireless or wired communication, and controls a motion of the robot.

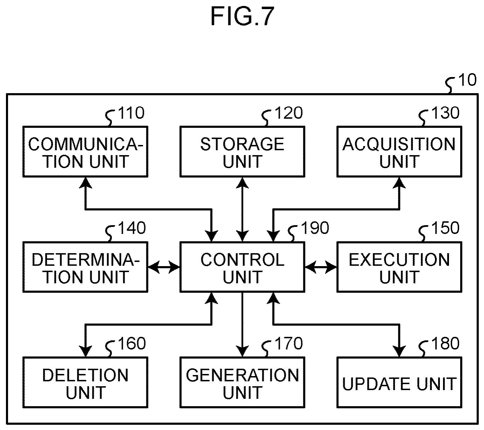

FIG. 7 is a block diagram illustrating a functional configuration example of the control device 100 according to the present embodiment. As illustrated in FIG. 7, the control device 100 according to the present embodiment includes, for example, a communication unit 110, a storage unit 120, an acquisition unit 130, a determination unit 140, an execution unit 150, a deletion unit 160, a generation unit 170, an update unit 180, and a control unit 190.

### (Communication Unit 110)

The communication unit 110 according to the present embodiment is connected to various communication networks such as the Internet in a wireless or wired manner, and transmits and receives information to and from a robot such as a mobile manipulator, other information processing devices, and the like on the networks.

### (Storage Unit 120)

The storage unit 120 according to the present embodiment is a storage area for temporarily or permanently storing various programs and data. For example, the storage unit 120 can store programs and data for the control device 100 to execute various functions. As a specific example, the storage unit 120 may store a program, data, and the like for operating a robot such as a mobile manipulator. Of course, the above is merely an example, and the type of data stored in the storage unit 120 is not particularly limited.

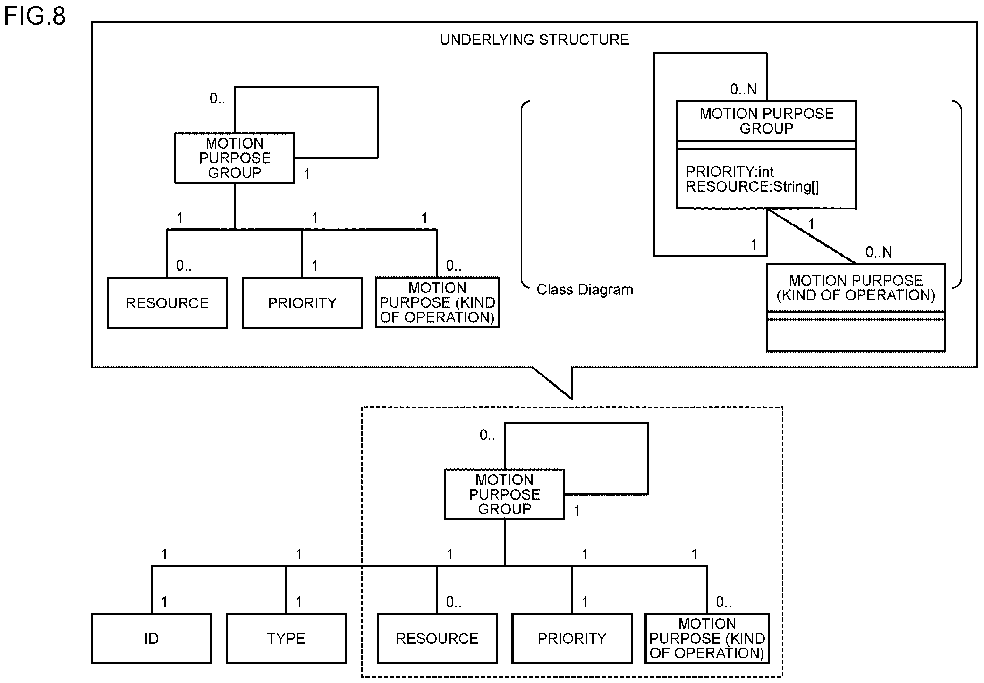

Here, the data for operating the robot in the present embodiment is represented by, for example, a cyclic structure in which the minimum unit of operation is a motion purpose. FIG. 8 is a diagram for describing the representation of the cyclic structure according to the present embodiment. The cyclic structure is, for example, a tree structure, and as illustrated in the upper part of FIG. 8, an underlying structure includes a motion purpose group including a motion purpose of 0 or more that is a kind of an operation of the robot. Further, the motion purpose group may include, for example, a priority in which an execution order of the operation is designated, and a resource in which a part for executing the operation is designated, such as a right hand or a left hand of the robot. Further, as illustrated in the lower part of FIG. 8, the motion purpose group may include, for example, a type indicating a relationship between motion purpose groups. For example, "Child" may be designated in a case where a target motion purpose group is a child group of a higher-level group, and "Root" may be designated for a parent group. Further, as illustrated in the lower part of FIG. 8, for example, an ID that is an identifier uniquely indicating the motion purpose group may be designated for the motion purpose group. Although details of the execution order of the motion purposes (operations) using the cyclic structure will be described later, for example, it is predetermined that the operations are executed from the left or the right of the cyclic structure, and the operations are executed in order from a motion purpose group at one of the left and right ends. Note that, for example, a parent group such as an operation example may be further arranged in one parent to many children relationships above the motion purpose group, and the motion purpose group may be expressed as a subset of the operation example.

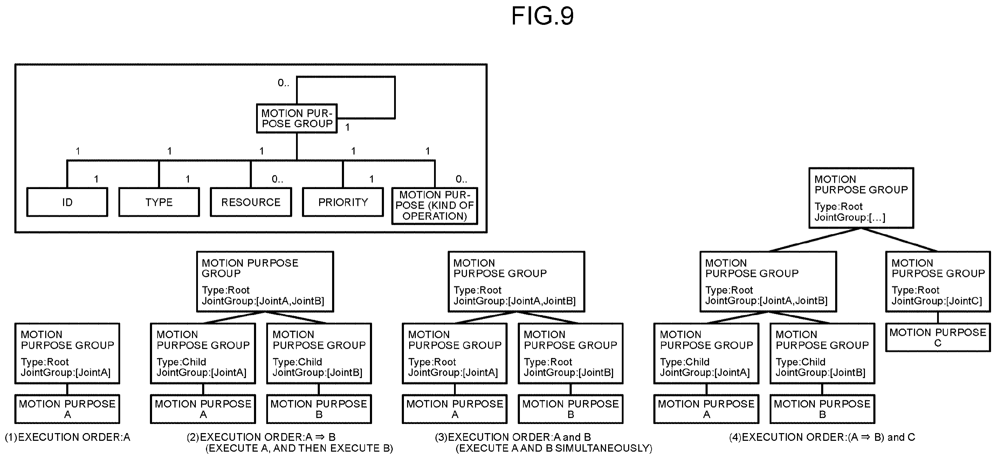

Next, the execution order of the motion purposes (operations) using the cyclic structure will be described. FIG. 9 is a diagram for describing the execution order of motion control using the cyclic structure according to the present embodiment. In the example of FIG. 9, the execution order of the cyclic structure including the motion purpose group as illustrated in FIG. 8 will be described using four examples. Further, in the example of FIG. 9, it is assumed to be executed in order from a motion purpose group at the left end.

Example (1) in FIG. 9 is an example of a case where the cyclic structure includes only a motion purpose group including a motion purpose A. In this case, "Root" is designated as a type of the motion purpose group including the motion purpose A, and the motion purpose A is first executed as the motion control of the robot, and the processing ends.

Example (2) in FIG. 9 is an example of a case where the cyclic structure includes a parent motion purpose group including two motion purpose groups respectively including motion purposes A and B. Further, "Root" is designated as a type of the parent motion purpose group. Further, "Child" is designated as types of the two motion purpose groups respectively including the motion purposes A and B. In this case, as the motion control of the robot, first, the motion purpose A included in the motion purpose group at the left end is executed, and then, the motion purpose B is executed, and the processing ends.

Example (3) in FIG. 9 is an example of a case where the cyclic structure includes the parent motion purpose group including the motion purpose groups with the motion purposes A and B similarly to Example (2). However, "Root" is designated as a type of the motion purpose groups with the motion purposes A and B, which is different from Example (2). In this case, as the motion control of the robot, the motion purpose A included in the motion purpose group at the left end and the motion purpose B of the motion purpose group in which "Root" is designated at the same level with the motion purpose group including the motion purpose A are simultaneously executed, and the processing ends.

Example (4) in FIG. 9 is an example of a case where the cyclic structure further includes a parent motion purpose group including the parent motion purpose group including the two motion purpose groups respectively including the motion purposes A and B in Example (2), and a motion purpose group including a motion purpose C. Further, "Root" is designated as a type of the parent motion purpose group of the motion purpose groups respectively including the motion purposes A and B and the motion purpose group including the motion purpose C. In this case, as the motion control of the robot, first, the motion purpose A included in the motion purpose group at the left end is executed. Next, the motion purpose B is executed, and the motion purpose C of the motion purpose group in which "Root" is designated at the same level with the parent motion purpose group of the motion purpose groups respectively including the motion purposes A and B is executed in parallel with the execution of the motion purposes A and B, and the processing ends.

### (Acquisition Unit 130)

Returning to the description of FIG. 7, the acquisition unit 130 according to the present embodiment acquires a terminal element from, for example, a cyclic structure having rules for operations of the robot as elements. Here, the cyclic structure having rules for operations of the robot as elements is, for example, the cyclic structure including the motion purpose groups as described with reference to FIG. 8 as elements. Further, the terminal element is, for example, a motion purpose group at the left end in a case where it is defined that the operations are executed from the left of the cyclic structure as the execution order of motion purposes (operations) using the cyclic structure, and is a motion purpose group at the right end in a case where it is defined that the operations are executed from the right. Further, the acquisition unit 130 acquires, for example, an element in the next execution order for an operation determined as the operation to be executed from the cyclic structure.

Further, for example, in a case where the terminal element indicates a predetermined type, the acquisition unit 130 acquires a first element indicating the predetermined type from a group to which the terminal element belongs. Here, the predetermined type is a type indicating a relationship between the motion purpose groups as described with reference to FIG. 8. Further, the case where the terminal element indicates the predetermined type is, for example, a case where the type of the terminal element indicates "Root". Further, the group to which the terminal element belongs is, for example, a parent motion purpose group including the terminal element. That is, the acquisition of the first element is, for example, acquiring the first element together with the terminal element for the simultaneous execution of operations as illustrated in Example (3) in FIG. 9.

Further, for example, in a case where a resource for executing the operation is designated for the terminal element, the acquisition unit 130 acquires a second element in the next execution order for the terminal element from the group to which the terminal element belongs, the second element being designated with a first resource different from the resource. Here, the resource is a resource in which a part for executing the operation is designated as described with reference to FIG. 8.

Further, the acquisition unit 130 acquires, for example, the operations and identifiers of the operations. Further, the acquisition unit 130 acquires, for example, an identifier of a third operation to be added to the cyclic structure. Further, the acquisition unit 130 acquires, for example, an identifier of a fourth operation to be deleted from the cyclic structure. Here, the identifier is an ID that is an identifier uniquely indicating the motion purpose group as described with reference to FIG. 8.

### (Determination Unit 140)

For example, the determination unit 140 according to the present embodiment determines an operation to be executed based on the terminal element acquired by the acquisition unit 130. Here, the determination of the operation to be executed based on the terminal element is, for example, determining an operation corresponding to the terminal element, that is, an operation included in the motion purpose group at the end, as the operation to be executed.

Further, the determination unit 140 determines an operation to be executed based on, for example, the element in the next execution order acquired by the acquisition unit 130. The determination of the operation to be executed based on the element in the next execution order is, for example, determining, as the operation to be executed, an operation included in a motion purpose group of the element in the next execution order for the operation determined by the determination unit 140 as the operation to be executed.

Further, the determination unit 140 determines a first operation to be executed based on the first element acquired by the acquisition unit 130, for example. Note that the first element is, for example, the motion purpose group including the motion purpose B for which "Root" is designated, the motion purpose group being acquired for the simultaneous execution of operations as illustrated in the Example (3) in FIG. 9. Therefore, the determination of an operation to be executed based on the first element is, for example, determining an operation included in the motion purpose group acquired for the simultaneous execution as the operation to be executed.

Further, the determination unit 140 determines a second operation to be executed based on the second element acquired by the acquisition unit 130, for example. Note that the second element is a motion purpose group in which a resource different from the resource for executing the operation determined by the determination unit 140 based on the terminal element is designated. Therefore, the determination of an operation to be executed based on the second element is, for example, determining, as the operation to be executed, an operation included in a motion purpose group in which a resource, different from the resource for executing the operation determined by the determination unit 140 based on the terminal element, is designated.

### (Execution Unit 150)

The execution unit 150 according to the present embodiment executes, for example, the operation determined by the determination unit 140. Note that the determination of the operation by the determination unit 140 and the execution of the operation by the execution unit 150 are repeated until there is no more element to be executed in the cyclic structure.

Further, the execution unit 150 executes, for example, the first operation determined by the determination unit 140 simultaneously with the operation determined by the determination unit 140 based on the terminal element. Such simultaneous execution of operations is, for example, the simultaneous execution of operations as illustrated in Example (3) in FIG. 9. Note that one of the operations to be simultaneously executed is the operation determined based on the terminal element is merely an example, and the operations to be simultaneously executed do not necessarily include the operation determined based on the terminal element.

Further, for example, the execution unit 150 executes the second operation determined by the determination unit 140 regardless of an execution state of the operation determined based on the terminal element. Note that the second operation is an operation corresponding to the second element in which the resource different from the resource for executing the operation determined by the determination unit 140 based on the terminal element is designated. For example, when the operation corresponding to the terminal element is an operation using the right hand of the robot, another resource such as the left hand of the robot can be used, and thus the execution unit 150 executes an operation using the other resource such as the left hand of the robot regardless of the execution state of the operation of the right hand of the robot. Note that one of the operations executed in consideration of the resources is the operation determined based on the terminal element is merely an example, and an operation executed in consideration of a resource is not necessarily the operation determined based on the terminal element.

### (Deletion Unit 160)

The deletion unit 160 according to the present embodiment deletes, for example, the element corresponding to the operation determined by the determination unit 140, the first element, and the second element from the cyclic structure. Note that the deletion of the element by the deletion unit 160 is repeated until the elements disappear from the cyclic structure. A method of deleting an element from the cyclic structure will be described later.

### (Generation Unit 170)

The generation unit 170 according to the present embodiment arranges the elements such that the operations are executed from the terminal element of the cyclic structure based on the identifiers of the operations, for example, thereby generating the cyclic structure. More specifically, for example, using the motion purpose groups as illustrated in FIG. 8 as the elements, the generation unit 170 generates the cyclic structures as illustrated in FIG. 9 such that the operations are executed from the motion purpose group at the end based on the IDs respectively designated for the motion purpose groups. Note that the generation of the cyclic structure may be performed by an information processing device different from the motion control using the generated cyclic structure. In this case, the generation unit 170 is not necessarily included in the control device 100, and may be included, for example, in a generation device or the like different from the control device 100.

### (Update Unit 180)

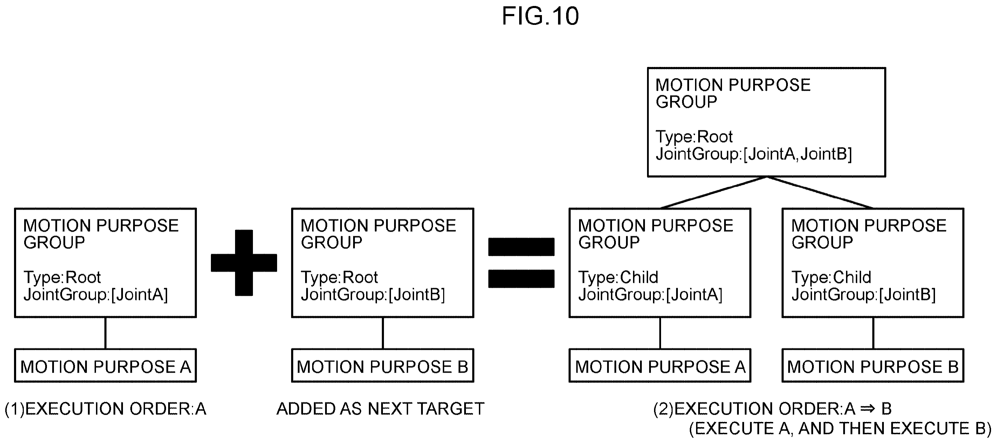

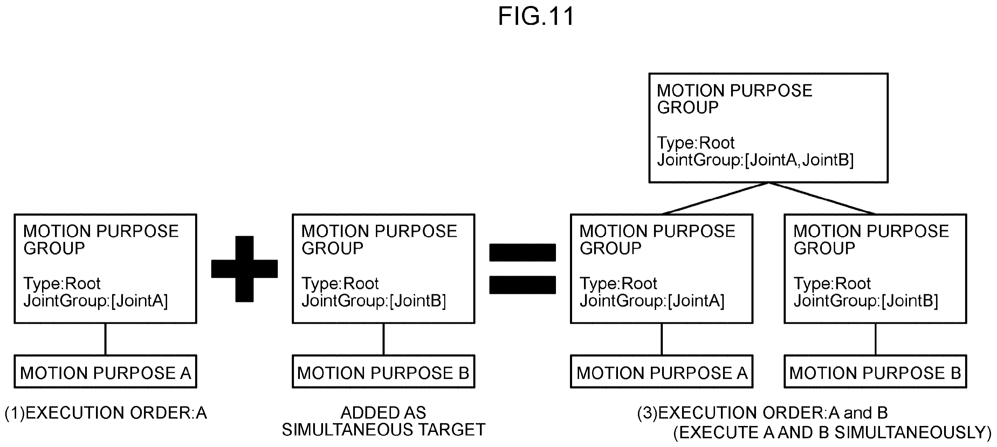

For example, the update unit 180 according to the present embodiment adds the third operation as an element of the cyclic structure such that the operations are executed from the terminal element of the cyclic structure based on an identifier of the operation, and updates the cyclic structure. Note that, for example, the identifier of the operation corresponds to the element to be added to the cyclic structure, and the element to be added and how to add the element, which is a target, are designated together with the identifier of the operation by an administrator of the robot or the like via an information processing terminal (not illustrated) or the like. A method of adding an operation to the cyclic structure will be described more specifically with reference to FIGS. 10 and 11.

FIG. 10 is a diagram for describing a method (1) of adding an operation to the cyclic structure according to the present embodiment. FIG. 10 is an example in which the update unit 180 adds a motion purpose group including the motion purpose B to the cyclic structure including only the motion purpose group including the motion purpose A as illustrated in Example (1) in FIG. 9, for example. Further, in the example of FIG. 10, the cyclic structure is updated such that the motion purpose A and the motion purpose B are executed in order as illustrated in Example (2) in FIG. 9.

In a case where the motion purpose group is added as the next target to be executed next to a motion purpose (group) already included in cyclic structure as illustrated in FIG. 10, the update unit 180, for example, changes a type of the motion purpose group to add, to a child group (Child). Further, for example, the update unit 180 also changes a type of the motion purpose group, which is not to be added but belongs to the same parent motion purpose group as the motion purpose group to be added, to a child group (Child). Then, for example, the update unit 180 sets a type of the parent motion purpose group as a parent group (Root), and matches a priority of the parent group with the highest priority of the child groups. Further, for example, the update unit 180 sets a resource of the parent group to be a sum of a set of resources of the child groups.

Further, FIG. 11 is a diagram for describing a method (2) of adding an operation to the cyclic structure according to the present embodiment. Similarly to FIG. 10, FIG. 11 is an example in which the update unit 180 adds a motion purpose group including the motion purpose B to the cyclic structure including only the motion purpose group including the motion purpose A as illustrated in Example (1) in FIG. 9, for example. However, in the example of FIG. 11, the cyclic structure is updated such that the motion purpose A and the motion purpose B are simultaneously executed as illustrated in Example (3) in FIG. 9.

In a case where the motion purpose group is added as a simultaneous target to be executed simultaneously with a motion purpose (group) already included in cyclic structure as illustrated in FIG. 11, the update unit 180 executes processing as follows, for example. For example, the update unit 180 compares resources between the motion purpose group to be added and the motion purpose group which is not to be added but belongs to the same parent motion purpose group as the motion purpose group to be added. In a case where the resources of the motion purpose group to be added and the motion purpose group not to be added do not overlap, the update unit 180 matches a priority of the parent motion purpose group with the lowest priority of the child groups, for example. Further, for example, the update unit 180 sets a resource of the parent motion purpose group to be a sum of a set of resources of the child groups. On the other hand, in a case where the resources of the motion purpose group to be added and the motion purpose group not to be added overlap with each other, the update unit 180 matches the priority of the parent motion purpose group with the highest priority of the child groups, and sets the resource to be the same as the resource of one with the highest priority.

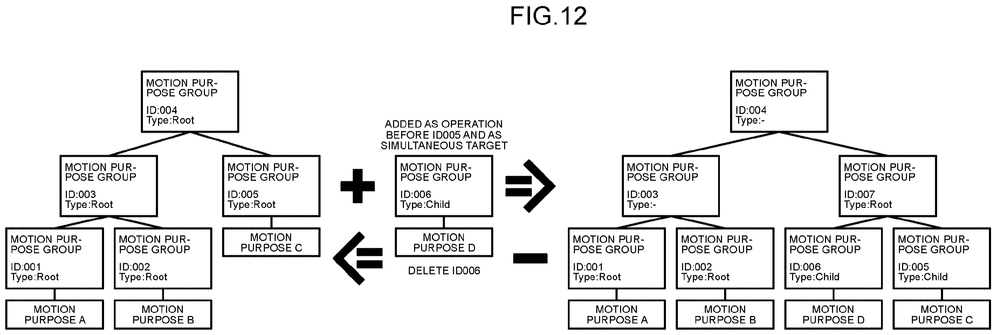

Returning to the description of FIG. 7, the update unit 180 deletes an element in which the fourth operation is arranged from the cyclic structure based on, for example, an identifier of the operation, and updates the cyclic structure. Note that, for example, the identifier of the operation corresponds to the element to be deleted to the cyclic structure, and is designated by the administrator of the robot or the like via the information processing terminal or the like. A method of deleting an operation from the cyclic structure will be described more specifically with reference to FIG. 12.

FIG. 12 is a diagram for describing a method of adding and deleting an operation to and from the cyclic structure according to the present embodiment. FIG. 12 illustrates an example in which the update unit 180 adds a motion purpose group of ID = 006, which is an identifier of an operation, as a simultaneous target of a motion purpose group of ID = 005 to a cyclic structure illustrated on the left side of FIG. 12, and updates the cyclic structure to be a cyclic structure illustrated on the right side of FIG. 12. Further, FIG. 12 illustrates an example in which the update unit 180 deletes the motion purpose group of ID = 006, which is the identifier of the operation, from the cyclic structure illustrated on the right side of FIG. 12 and updates the cyclic structure to be the cyclic structure illustrated on the left side of FIG. 12. For example, in the case of deleting the motion purpose group from the cyclic structure, the update unit 180 performs processing in a reverse procedure to processing in the case of adding the motion purpose group based on the ID that is the identifier designated for the operation corresponding to the motion purpose group to be deleted. As a result, the cyclic structure is updated to a state of the cyclic structure before the motion purpose group is added, that is, a state in which the target motion purpose group is deleted.

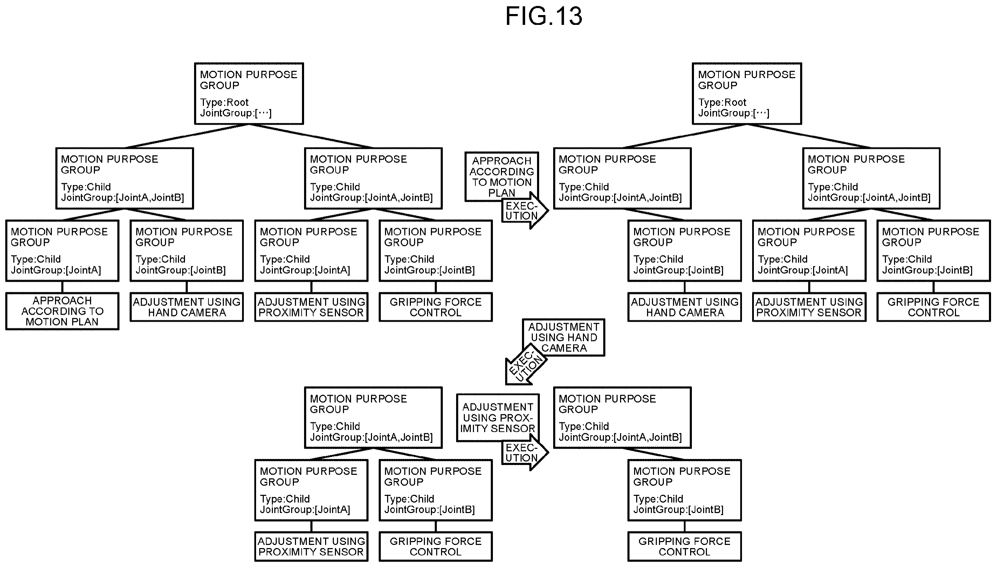

Note that, regarding deletion of a motion purpose group, there is also a case where a motion purpose group of an element corresponding to an operation determined to be executed by the determination unit 140 is deleted by the deletion unit 160, in addition to the process of updating the cyclic structure by the administrator of the robot or the like. FIG. 13 is a diagram for describing a normal system of the motion control using the cyclic structure according to the present embodiment. In the example of FIG. 13, first, as illustrated in the upper left of FIG. 13, operations are executed from "approach according to motion planning" corresponding to a motion purpose group that is a terminal element. Further, when the operation of "approach according to motion planning" is determined by the determination unit 140 as an operation to be executed, the deletion unit 160 deletes the motion purpose group corresponding to the operation of "approach according to motion planning" from the cyclic structure for the next execution. Then, the motion purpose group corresponding to the operation of "approach according to motion planning" is deleted, so that a terminal element of the cyclic structure becomes a motion purpose group corresponding to an operation of "adjustment using hand camera". Therefore, the operation of "adjustment using hand camera" is determined by the determination unit 140 as an operation to be executed next. Then, the deletion unit 160 deletes the motion purpose group corresponding to the operation of "adjustment using hand camera" from the cyclic structure for the next execution. Similarly, determination of an operation and deletion of an element, which is a motion purpose group, are performed for operations of "adjustment using proximity sensor" and "gripping force control". As described above, determination and execution of operations and deletion of elements of the cyclic structure are repeated until the elements disappear from the cyclic structure. Note that the timing of deleting an element of the cyclic structure is determined according to an operation to be executed, and may be before the operation is executed or after the operation is normally executed.

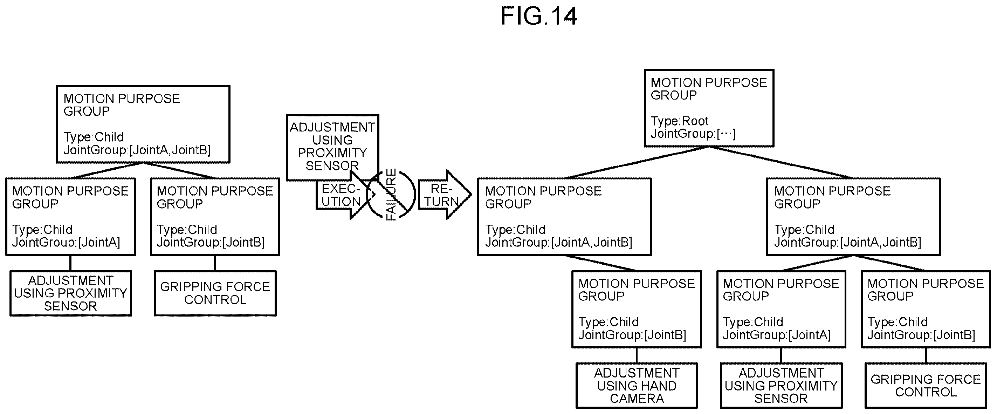

Further, FIG. 13 is an example of the motion control of the normal system when each of the operations is normally executed, but motion control of an abnormal system when execution of an operation fails will also be described. FIG. 14 is a diagram for describing the abnormal system of the motion control using the cyclic structure according to the present embodiment. FIG. 14 is an example of a case where execution of the operation of "adjustment using proximity sensor" in the example of FIG. 13 fails. In this case, for example, as return processing, it is determined to start over from the operation of "adjustment using hand camera", and the motion purpose group corresponding to the operation of "adjustment using hand camera" is added to the cyclic structure as illustrated on the right side of FIG. 14. As a result, a terminal element of the cyclic structure becomes the motion purpose group corresponding to the operation of "adjustment using hand camera", so that the operation of "adjustment using hand camera" is determined as an operation to be executed next. As described above, in the present embodiment, the execution order of motion control modes can be flexibly changed to ensure flexibility for the motion control.

### (Control Unit 190)

Returning to the description of FIG. 7, the control unit 190 according to the present embodiment controls each configuration included in the control device 100. In addition to the control of each configuration, the control unit 190 can control, for example, an application displayed on the deletion unit 160.

The functional configuration example of the control device 100 according to the present embodiment has been described above. Note that the above functional configuration described with reference to FIG. 2 is merely an example, and the functional configuration of the control device 100 according to the present embodiment is not limited to such an example. For example, the control device 100 does not necessarily include all the configurations illustrated in FIG. 7. The functional configuration of the control device 100 according to the present embodiment can be flexibly modified in accordance with specifications and operations.

Further, a computing device such as a central processing unit (CPU) may read and execute a control program describing a processing procedure for realizing a function of each component from a storage medium such as a read only memory (ROM) or a random access memory (RAM). Therefore, it is possible to change the configuration to be used as appropriate according to a technical level at the time of implementing the present embodiment. Further, an example of a hardware configuration of the control device 100 will be described later.

### <<1.2. Functional Flow>>

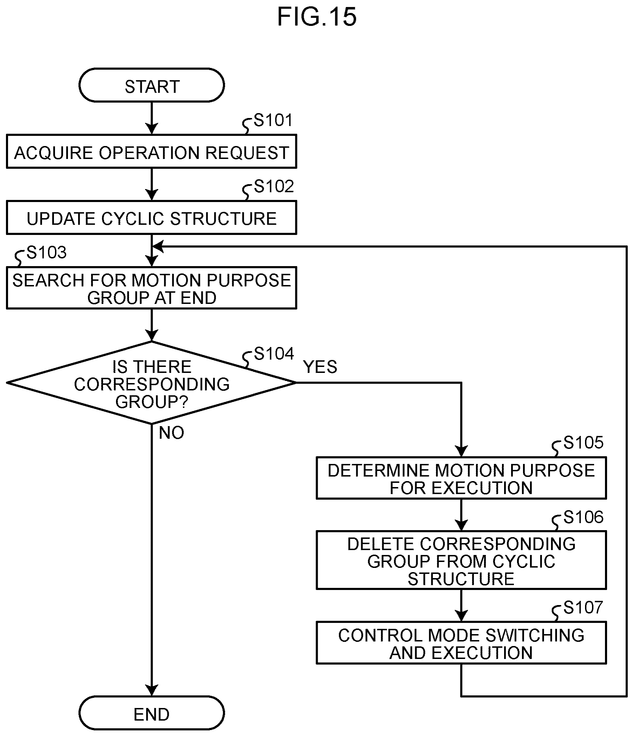

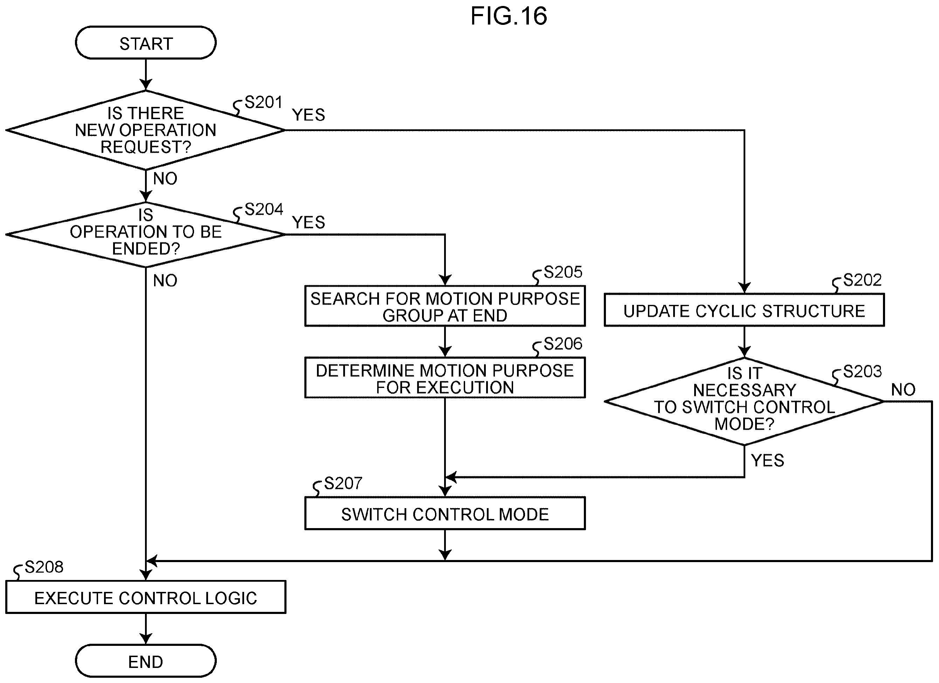

Next, the procedure of motion control processing using a cyclic structure will be described with reference to FIGS. 15 and 16. FIG. 15 is a flowchart illustrating a flow of the motion control processing using the cyclic structure according to the present embodiment. Note that the motion control processing illustrated in FIG. 15 assumes that the cyclic structure in which the minimum unit of operation is the motion purpose as described with reference to FIGS. 8 to 13 is generated in advance as data for operating a robot and stored in the control device 100.

First, as illustrated in FIG. 15, the control device 100 acquires an operation request of the robot from an administrator of the robot or the like via an information processing terminal or the like (Step S101). The operation request may be received and acquired in real time, or may be acquired in advance stored in the control device 100.

Next, the control device 100 updates the cyclic structure based on, for example, the operation request acquired in Step S101 (Step S102). The update of the cyclic structure may be executed, for example, in a case where an instruction do add or delete an operation to or from the cyclic structure as illustrated in FIGS. 10 to 12 is made by the operation request acquired in Step S101.

Next, for example, the control device 100 searches for a motion purpose group at an end with respect to the cyclic structure (Step S103). The search for the motion purpose group at the end may be, for example, a process of acquiring the motion purpose group at one of the left and right ends from the cyclic structure based on a predetermined execution order of the cyclic structure. In a case where the motion purpose group at the end cannot be acquired and is absent (Step S104: No), the motion control processing illustrated in FIG. 15 ends.

On the other hand, in a case where the motion purpose group at the end can be acquired and is present (Step S104: Yes), the control device 100 determines, for example, a motion purpose (kind of operation) corresponding to the motion purpose group at the end as an operation to be executed (Step S105).

Next, for example, the control device 100 deletes the motion purpose group at the end acquired in Step S103 from the cyclic structure (Step S106).

Next, the control device 100 switches to, for example, a motion control mode for executing the operation determined in Step S105, and executes the operation (Step S107). After the execution of Step S107, the processing returns to Step S103, and Steps S103 to S107 are repeated until there is no more motion purpose group at the end in the cyclic structure (Step S104: No). Note that the motion purpose group at the end corresponding to the operation executed in Step S107 has been deleted in Step S106. Therefore, the motion purpose group at the end found after returning to Step S103 is a motion purpose group that has newly become a motion purpose group at the end after the deletion of the motion purpose group at the end.

Next, a flow of motion control processing different from the motion control processing illustrated in FIG. 15 will be described. FIG. 16 is a flowchart illustrating another example of the flow of the motion control processing using the cyclic structure according to the present embodiment. The motion control processing illustrated in FIG. 16 is processing of controlling an operating robot by flexibly changing the execution order of motion control modes. Similarly to FIG. 15, the motion control processing illustrated in FIG. 16 also assumes that the cyclic structure is generated in advance as data for operating the robot and stored in the control device 100.

First, as illustrated in FIG. 16, the control device 100 determines, for example, whether there is a new operation request for the operating robot from an administrator of the robot or the like via an information processing terminal or the like (Step S201). In a case where there is no new operation request (Step S201: No), the control device 100 determines whether to end an operation that is being executed (Step S204), and in a case where the operation is to be continued (Step S204: No), control logic of the operating robot is continuously executed (Step S208). After the execution of Step S208, the motion control processing illustrated in FIG. 16 ends.

On the other hand, in a case where there is a new operation request (Step S201: Yes), the control device 100 updates the cyclic structure based on the operation request, for example (Step S202). The update of the cyclic structure may be, for example, addition or deletion of the operation to or from the cyclic structure as illustrated in FIGS. 10 to 12 or 14.

Next, the control device 100 determines whether it is necessary to switch a motion control mode in order to perform motion control of the operating robot based on, for example, the cyclic structure updated in Step S202 (Step S203). In a case where it is necessary to switch the motion control mode (Step S203: Yes), the control device 100 switches the motion control mode (Step S207), and executes control logic of the operating robot based on the cyclic structure updated in Step S202 (Step S208). On the other hand, in a case where it is not necessary to switch the motion control mode (Step S203: No), the control device 100 executes the control logic of the operating robot based on, for example, the cyclic structure updated in Step S202 (Step S208).

Further, in a case where there is no new operation request (Step S201: No) and the operation that is being executed is to be ended (Step S204: Yes), the control device 100 searches for a motion purpose group at an end in the cyclic structure to be executed subsequently, for example (Step S205). Note that the search for the motion purpose group at the end in Step S205 is similar to the search in Step S103 in the motion control processing illustrated in FIG. 15. Note that, after the execution of Step S205, it may be determined whether the motion purpose group at the end has been acquired by searching for the motion purpose group at the end of Step S205 as in Step S104 in the motion control processing illustrated in FIG. 15.

Next, for example, the control device 100 determines a motion purpose (kind of operation) corresponding to the motion purpose group at the end acquired in Step S205 as an operation to be executed (Step S206).

Then, for example, the control device 100 switches to a motion control mode for executing the operation determined in Step S206 (Step S207), and executes control logic of the robot based on the cyclic structure (Step S208).

### <2. Hardware Configuration Example>

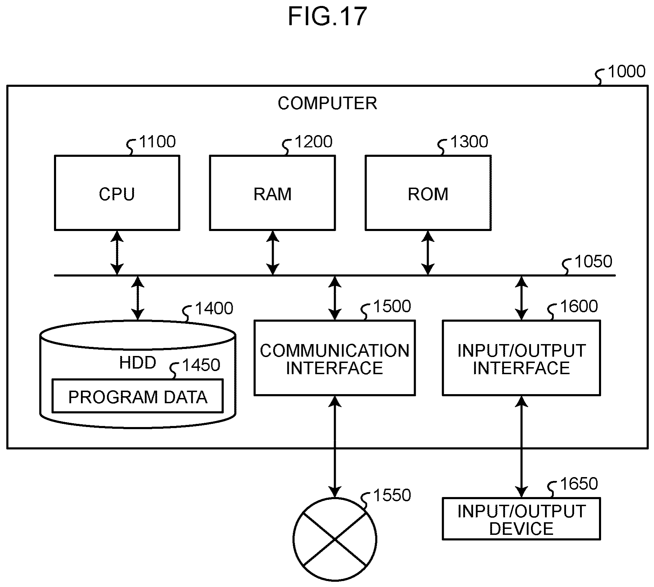

Next, a hardware configuration example of the control device 100 according to the present embodiment will be described. Information devices, such as the control device 100 according to the present embodiments described above, are realized by a computer 1000 having a configuration as illustrated in FIG. 17, for example. Hereinafter, the control device 100 will be described as an example. FIG. 17 is a block diagram illustrating the hardware configuration example of the control device 100 according to the present embodiment. The computer 1000 includes a CPU 1100, a RAM 1200, a ROM 1300, a hard disk drive (HDD) 1400, a communication interface 1500, and an input/output interface 1600. Each unit of the computer 1000 is connected by a bus 1050.

The CPU 1100 is operated based on a program stored in the ROM 1300 or the HDD 1400, and controls each unit. For example, the CPU 1100 develops a program stored in the ROM 1300 or the HDD 1400 into the RAM 1200 and executes processes corresponding to various programs.

The ROM 1300 stores a boot program such as a basic input output system (BIOS) executed by the CPU 1100 when the computer 1000 starts up, a program depending on hardware of the computer 1000, and the like.

The HDD 1400 is a computer-readable recording medium that non-temporarily records a program executed by the CPU 1100, data used by the program, and the like. Specifically, the HDD 1400 is a recording medium that records a proposed program and the like according to the present disclosure, which is an example of program data 1450.

The communication interface 1500 is an interface for connecting the computer 1000 to an external network 1550 (for example, the Internet). For example, the CPU 1100 receives data from other devices or transmits data generated by the CPU 1100 to the other devices via the communication interface 1500.

The input/output interface 1600 is an interface for connecting between an input/output device 1650 and the computer 1000. For example, the CPU 1100 receives data from an input device such as a keyboard or a mouse via the input/output interface 1600. Further, the CPU 1100 transmits data to an output device such as a display, a speaker, or a printer via the input/output interface 1600. Further, the input/output interface 1600 may function as a media interface for reading a program or the like recorded on predetermined recording media. The media are, for example, optical recording media such as a digital versatile disc (DVD, registered trademark) or a phase change rewritable disk (PD), a magneto-optical recording medium such as a magneto-optical disk (MO), a tape medium, a magnetic recording medium, a semiconductor memory, or the like.

For example, when the computer 1000 functions as the control device 100 according to the embodiment, the CPU 1100 of the computer 1000 implements the functions of the control unit 190 and the like by executing the proposed program loaded on the RAM 1200. Further, the HDD 1400 stores the proposed program according to the present disclosure or data in the storage unit 120. Note that the CPU 1100 reads and executes the program data 1450 from the HDD 1400, but as another example, the CPU 1100 may acquire these programs from other devices via the external network 1550.

### <3. Summary>

As described above, the control device 100 includes a control unit that executes processing of: acquiring a terminal element from a cyclic structure having rules for operations of a robot as elements; determining an operation to be executed based on the terminal element; executing the determined operation; acquiring an element in the next execution order for the determined operation from the cyclic structure; determining an operation to be executed based on the element in the next execution order; and repeating the determination and the execution of the operations until the elements to be executed disappear from the cyclic structure.

As described above, motion control of the robot is performed using the cyclic structure having the rules for the operations of the robot as the elements, so that the control device 100 can ensure flexibility for the motion control of the robot.

Although the preferred embodiment of the present disclosure has been described as above in detail with reference to the accompanying drawings, a technical scope of the present disclosure is not limited to such an example. It is apparent that a person who has ordinary knowledge in the technical field of the present disclosure can find various alterations and modifications within the scope of technical ideas described in the claims, and it should be understood that such alterations and modifications will naturally pertain to the technical scope of the present disclosure.

Further, the effects described in the present specification are merely illustrative or exemplary, and are not limited. That is, the technology according to the present disclosure can exhibit other effects that are obvious to those skilled in the art from the description in the present specification, in addition to or instead of the above effects.

Note that the present technology can also have the following configurations.
(1)A control method in which a control device executes processing of:
   acquiring a terminal element from a cyclic structure having rules for operations of a robot as elements;
   determining one of the operations to be executed based on the terminal element;
   executing the determined operation;
   acquiring, from the cyclic structure, one of the elements in a next execution order for the determined operation;
   determining another of the operations to be executed based on the element in the next execution order; and
   repeating the determination and the execution of the operations until the elements to be executed disappear from the cyclic structure.
(2) The control method according to (1), in which the control device executes processing of:
   deleting, from the cyclic structure, the element corresponding to the determined operation; and
   repeating the deletion of the element until the elements disappear from the cyclic structure.
(3) The control method according to (1) or (2), in which the control device executes processing of:
   acquiring a first element indicating a predetermined type from a group to which the terminal element belongs when the terminal element indicates the predetermined type;
   determining a first operation to be executed based on the first element;
   deleting the first element from the cyclic structure; and
   executing the first operation simultaneously with the operation determined based on the terminal element.
(4) The control method according to any one of (1) to (3), in which the control device executes processing of:
   acquiring a second element in a next execution order for the terminal element from a group to which the terminal element belongs when a resource for executing the operation is designated for the terminal element, the second element being designated with a first resource different from the resource;
   determining a second operation to be executed based on the second element;
   deleting the second element from the cyclic structure; and
   executing the second operation regardless of an execution state of the operation determined based on the terminal element.
(5) The control method according to any one of (1) to (4), in which the control device executes processing of:
   acquiring the operations and identifiers of the operations; and
   arranging the elements in such a manner that the operations are executed from the terminal element of the cyclic structure based on the identifiers and generating the cyclic structure.
(6) The control method according to any one of (1) to (5), in which the control device executes processing of:
   acquiring an identifier of a third operation to be added to the cyclic structure; and
   adding the third operation as an element of the cyclic structure based on the identifier in such a manner that the operations are executed from the terminal element of the cyclic structure and updating the cyclic structure.
(7) The control method according to any one of (1) to (6), in which the control device executes processing of:
   acquiring an identifier of a fourth operation to be deleted from the cyclic structure; and
   deleting an element in which the fourth operation is arranged from the cyclic structure based on the identifier, and updating the cyclic structure.
(8) A control device comprising:
   an acquisition unit that acquires a terminal element from a cyclic structure having rules for operations of a robot as elements;
   a determination unit that determines one of the operations to be executed based on the terminal element;
   an execution unit that executes the determined operation;
   the acquisition unit acquiring one of the elements in a next execution order for the determined operation from the cyclic structure,
   the determination unit determining another of the operations to be executed based on the element in the next execution order; and
   a control unit that executes a process of repeating the determination and the execution of the operations until the elements to be executed disappear from the cyclic structure.
(9) A generation method in which a generation device executes processing of:
   acquiring operations of a robot and identifiers for executing the operations;
   arranging the operations as elements of the cyclic structure based on the identifiers in such a manner that the operations are executed from a terminal element of the cyclic structure and generating the cyclic structure with rules for the operations as the elements.
(10) The generation method according to (9), in which the generation device executes processing of:
   acquiring a third identifier indicating an execution order of a third operation to be added to the cyclic structure; and
   adding the third operation as an element of the cyclic structure based on the third identifier in such a manner that the operations are executed from the terminal element of the cyclic structure and updating the cyclic structure.
(11) The generation method according to (9) or (10), wherein in which the generation device executes processing of:
   acquiring a fourth identifier indicating an execution order of a fourth operation to be deleted from the cyclic structure; and
   deleting an element in which the fourth operation is arranged from the cyclic structure based on the fourth identifier, and updating the cyclic structure.
(12)A generation device comprising:
   an acquisition unit that acquires an operation of a robot and an identifier for executing the operation; and
   a generation unit that arranges the operation as an element of a cyclic structure based on the identifier in such a manner that the operation is executed from a terminal element of the cyclic structure and generating the cyclic structure having a rule for the operation as the element.

### Reference Signs List

- 10: HAND
- 20: TARGET OBJECT
- 100: CONTROL DEVICE
- 110: COMMUNICATION UNIT
- 120: STORAGE UNIT
- 130: ACQUISITION UNIT
- 140: DETERMINATION UNIT
- 150: EXECUTION UNIT
- 160: DELETION UNIT
- 170: GENERATION UNIT
- 180: UPDATE UNIT
- 190: CONTROL UNIT
- 1000: COMPUTER
- 1050: BUS
- 1100: CPU
- 1200: RAM
- 1300: ROM
- 1400: HDD
- 1450: PROGRAM DATA
- 1500: COMMUNICATION INTERFACE
- 1550: EXTERNAL NETWORK
- 1600: INPUT/OUTPUT INTERFACE
- 1650: INPUT/OUTPUT DEVICE

## Claims

1. A control method in which a control device executes processing of:
acquiring a terminal element from a cyclic structure having rules for operations of a robot as elements;
determining one of the operations to be executed based on the terminal element;
executing the determined operation;
acquiring, from the cyclic structure, one of the elements in a next execution order for the determined operation;
determining another of the operations to be executed based on the element in the next execution order; and
repeating the determination and the execution of the operations until the elements to be executed disappear from the cyclic structure.

2. The control method according to claim 1, in which the control device executes processing of:
deleting, from the cyclic structure, the element corresponding to the determined operation; and
repeating the deletion of the element until the elements disappear from the cyclic structure.

3. The control method according to claim 1, in which the control device executes processing of:
acquiring a first element indicating a predetermined type from a group to which the terminal element belongs when the terminal element indicates the predetermined type;
determining a first operation to be executed based on the first element;
deleting the first element from the cyclic structure; and
executing the first operation simultaneously with the operation determined based on the terminal element.

4. The control method according to claim 1, in which the control device executes processing of:
acquiring a second element in a next execution order for the terminal element from a group to which the terminal element belongs when a resource for executing the operation is designated for the terminal element, the second element being designated with a first resource different from the resource;
determining a second operation to be executed based on the second element;
deleting the second element from the cyclic structure; and
executing the second operation regardless of an execution state of the operation determined based on the terminal element.

5. The control method according to claim 1, in which the control device executes processing of:
acquiring the operations and identifiers of the operations; and
arranging the elements in such a manner that the operations are executed from the terminal element of the cyclic structure based on the identifiers and generating the cyclic structure.

6. The control method according to claim 1, in which the control device executes processing of:
acquiring an identifier of a third operation to be added to the cyclic structure; and
adding the third operation as an element of the cyclic structure based on the identifier in such a manner that the operations are executed from the terminal element of the cyclic structure and updating the cyclic structure.

7. The control method according to claim 1, in which the control device executes processing of:
acquiring an identifier of a fourth operation to be deleted from the cyclic structure; and
deleting an element in which the fourth operation is arranged from the cyclic structure based on the identifier, and updating the cyclic structure.

8. A control device comprising:
an acquisition unit that acquires a terminal element from a cyclic structure having rules for operations of a robot as elements;
a determination unit that determines one of the operations to be executed based on the terminal element;
an execution unit that executes the determined operation;
the acquisition unit acquiring one of the elements in a next execution order for the determined operation from the cyclic structure,
the determination unit determining another of the operations to be executed based on the element in the next execution order; and
a control unit that executes a process of repeating the determination and the execution of the operations until the elements to be executed disappear from the cyclic structure.

9. A generation method in which a generation device executes processing of:
acquiring operations of a robot and identifiers for executing the operations;
arranging the operations as elements of the cyclic structure based on the identifiers in such a manner that the operations are executed from a terminal element of the cyclic structure and generating the cyclic structure with rules for the operations as the elements.

10. The generation method according to claim 9, in which the generation device executes processing of:
acquiring a third identifier indicating an execution order of a third operation to be added to the cyclic structure; and
adding the third operation as an element of the cyclic structure based on the third identifier in such a manner that the operations are executed from the terminal element of the cyclic structure and updating the cyclic structure.

11. The generation method according to claim 9, in which the generation device executes processing of:
acquiring a fourth identifier indicating an execution order of a fourth operation to be deleted from the cyclic structure; and
deleting an element in which the fourth operation is arranged from the cyclic structure based on the fourth identifier, and updating the cyclic structure.

12. A generation device comprising:
an acquisition unit that acquires an operation of a robot and an identifier for executing the operation; and
a generation unit that arranges the operation as an element of a cyclic structure based on the identifier in such a manner that the operation is executed from a terminal element of the cyclic structure and generating the cyclic structure having a rule for the operation as the element.
